# EUROPÄISCHE PATENTSCHRIFT

(11) **EP 2 298 070 B1**
(45) Veröffentlichungstag und Bekanntmachung des Hinweises auf die Patenterteilung: **18.04.2012**
(21) Anmeldenummer: 09405157.0
(22) Anmeldetag: 17.09.2009
(51) Int. Cl.: A01K 13/00

(54) **Handgerät und Vorrichtung zum Trocknen eines Haustieres**
Handheld appliance and device for drying a pet
Appareil manuel et dispositif pour le séchage d'un animal domestique

(43) Veröffentlichungstag der Anmeldung: 23.03.2011
(73) Patentinhaber: Morgenthaler, Max, 4653 Obergösgen (CH)
(72) Erfinder: Morgenthaler, Max, 4653 Obergösgen (CH)
(74) Vertreter: Wagner, Wolfgang Heribert

(56) Entgegenhaltungen:
- WO-A-02/089650
- WO-A-2005/020743
- US-A- 5 115 765
- US-A1- 2002 189 049
- US-A1- 2009 126 649

## Beschreibung

### Technisches Gebiet

Die Erfindung betrifft ein Handgerät zum Trocknen von Haustieren sowie eine ein solches Handgerät umfassende Trocknungsvorrichtung. Das Handgerät kann zum Trocknen und gleichzeitigen Reinigen manuell über das Fell eines Hundes, der im Regen oder durch Schwimmen in einem Gewässer nass geworden ist, geführt werden. Es können aber auch andere grössere Haustiere wie z.B. Katzen damit behandelt werden.

### Stand der Technik

Ein gattungsgemässes Handgerät ist aus US 2009/126 649 A1 bekannt. Es weist eine etwa rechteckige Absaugöffnung auf mit einem längs eines Randes derselben vorstehenden Kamm. Wird das Handgerät über das Fell eines Tieres geführt, so werden durch den Kamm Haare und Verunreinigungen vom Fell abgestreift und vom Luftstrom in die Absaugöffnung gezogen. Ist aber das Fell nass, wird es dabei nicht wirksam getrocknet. Zwar kann die Absaugöffnung zum Trocknen des Haustiers auch als Ausblasöffnung verwendet werden, doch werden dann leicht lose Haare und Verunreinigungen in die Umgebung geblasen, was vor allem in Innenräumen unerwünscht ist.

Aus US 5 115 765 A ist ein weiteres Handgerät bekannt, in welches ein Ventilator und eine Heizung integriert sind. Es weist eine mittige Absaugöffnung auf, die von einer kreisringförmigen Ausblasöffnung umgeben ist. Unterhalb der beiden Oeffnungen ist eine Bürste angeordnet. Damit die Luftströmung nicht zu stark behindert wird, ist die Bürste offenbar sehr locker ausgebildet mit weit auseinanderstehenden Borsten. Sie ist daher zu einer gründlichen Reinigung und Trocknung eines Fells einschliesslich Abstreifens loser Haare und Verunreinigungen nicht ohne weiteres geeignet. Dementsprechend soll das Gerät auch vor allem der Entfernung von Flöhen aus dem Fell dienen.

Ein ähnliches Handgerät ist in WO 2005/020 743 A1 beschrieben. Auch hier ist eine Ausblasöffnung für trockene oder warme Luft von einer kreisringförmigen Ansaugöffnung umgeben. Ein Kamm oder eine andere Abstreifvorrichtung ist offenbar nicht vorgesehen, sodass eine gründliche Entfernung loser Haare und Verunreinigungen aus einem nassen Fell kaum möglich ist.

WO 02/089 650 A1 zeigt ein Handgerät zum Reinigen von Oberflächen, bei welchem eine kreisringförmige Ausblasöffnung von einer ebenfalls kreisringförmigen Absaugöffnung umgeben ist. Daneben ist auch ein Handgerät ersichtlich, bei welchem Ausblasöffnung und Absaugöffnung rechteckig ausgebildet und unmittelbar nebeneinander in einer Ebene oder gestuft angeordnet sind. Eine Abstreifvorrichtung wie ein Kamm o.dgl. ist jedoch nicht vorgesehen. Das Handgerät dürfte daher zum Trocknen eines Haustieres, bei welchem auch lose Haare und Verunreinigungen entfernt werden müssen, wenig geeignet sein. Die Schrift zeigt auch eine Vorrichtung, bei welcher das Handgerät durch zwei Schläuche mit einer Pumpeinrichtung verbunden ist, welche einen Elektromotor als Antrieb umfasst, dessen Abwärme zur Heizung der ausgeblasenen Luft genutzt wird.

### Darstellung der Erfindung

Der Erfindung liegt die Aufgabe zu Grunde, ein Handgerät zum Trocknen eines Haustieres anzugeben, bei welchem lose Haare und andere Verunreinigungen nicht in die Umgebung geraten, sondern zuverlässig entfernt werden. Diese Aufgabe wird durch die Merkmale im kennzeichnenden Teil des Anspruchs 1 gelöst. Weiter soll die Erfindung eine Vorrichtung zum Trocknen eines Haustieres angeben, die bequem einsetzbar und leicht zu bedienen ist.

Bei Einsatz des erfindungsgemässen Handgeräts wird das Fell des Haustieres wirksam getrocknet. Zugleich werden Haare und Verunreinigungen gelockert und abgesaugt und auf diese Weise zuverlässig entfernt, ohne dass die Umgebung damit belastet würde. Die erfindungsgemässe Vorrichtung kann z.T. aus in einem Haushalt meist ohnedies vorhandenen Komponenten bestehen.

### Kurze Beschreibung der Zeichnungen

Im folgenden wird die Erfindung anhand von Figuren, welche lediglich Ausführungsbeispiele darstellen, näher erläutert. Es zeigen
- Fig. 1: einen Schnitt durch ein erfindungsgemässes Handgerät gemäss einer ersten Ausführungsform,
- Fig. 2: schematisch eine erfindungsgemässe Vorrichtung zum Trocknen eines Haustieres mit dem Handgerät gemäss Fig. 1 und
- Fig. 3: einen Schnitt durch ein erfindungsgemässes Handgerät gemäss einer zweiten Ausführungsform.

### Wege zur Ausführung der Erfindung

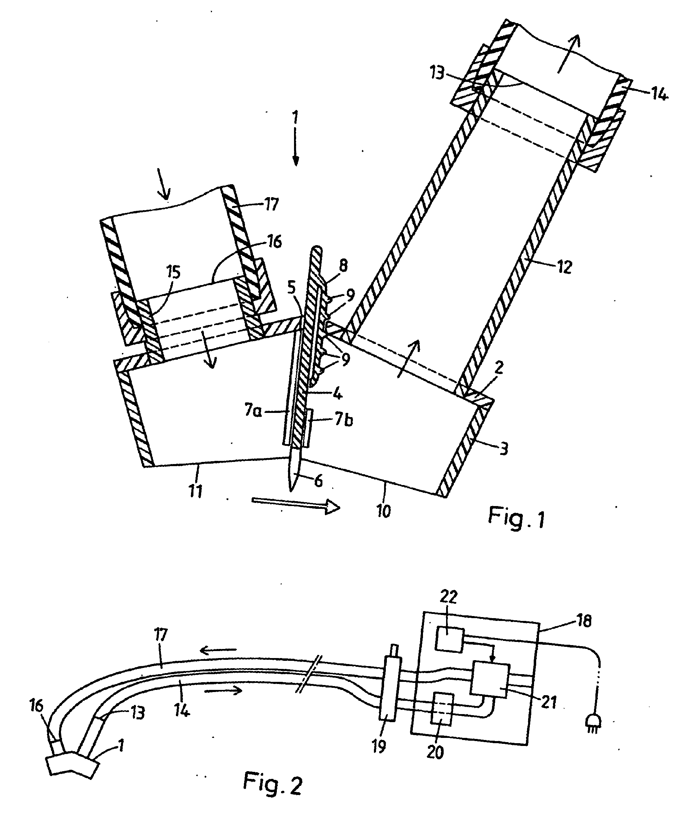

Das erfindungsgemässe Handgerät 1 weist gemäss einer ersten Ausführungsform (Fig. 1) ein Gehäuse auf mit einem dachförmigen, in der Mitte stumpfwinklig abgeknickten ovalen Deckel 2 und einem längs seines Randes umlaufenden, an einer Unterseite offenen Mantel 3, welcher eine Kammer umschliesst. Die Kammer ist durch eine mittige Zwischenwand 4 zweigeteilt, welche durch einen im Knick des Deckels 2 liegenden Schlitz 5 ragt und deren unterer Teil eine Abstreifvorrichtung 6 bildet, welche als quer durch die vom Rand des Mantels 3 umgebene leicht konkave Oeffnung sich erstreckender Kamm ausgebildet ist.

Die Zwischenwand 4 ist verschiebbar an beiden Enden in Nuten geführt, die jeweils zwischen am Mantel 3 angeformten Stegen 7a,b liegen. An der Zwischenwand 4 angeformt ist eine zu derselben parallele elastische Lasche 8, welche an einer von der Zwischenwand 4 abgewandten Aussenseite über ihre Länge regelmässig verteilte Zähne 9 aufweist, von welchen jeweils zwei unmittelbar aufeinanderfolgende an der Oberseite bzw. der Unterseite des Deckels 2 über den Rand des Schlitzes 5 überstehen, sodass die Zwischenwand 4 und damit die Abstreifvorrichtung 6 in einer von mehreren wählbaren Höhen mit dem Deckel 2 verrastbar ist. Ausser als Kamm kann die Abstreifvorrichtung als fester Steg oder flexibles Blatt mit gerader oder welliger Unterkante ausgebildet sein oder auch als Bürste.

Die vom Rand des Mantels 3 umgebene Oeffnung an der Unterseite des Gehäuses 1 wird durch die Zwischenwand 4 in eine Ansaugöffnung 10 und eine Ausblasöffnung 11 geteilt, deren Aussenränder jeweils von der entsprechenden Hälfte des unteren Randes des Mantels 3 gebildet werden und welche an der Zwischenwand 4 unmittelbar aneinander anschliessen, derart, dass die Ansaugöffnung 10 und die Ausblasöffnung 11 mindestens annähernd Ebenen definieren, die an der Abstreifvorrichtung 6 in nach unten offenem stumpfen Winkel aneinanderstossen. Der Deckel 2 weist auf der Seite der Absaugöffnung 10 eine mit derselben verbundene Oeffnung auf, welche durch einen am Deckel 2 fest verankerten langen ersten Anschlussstutzen 12 mit einem Sauganschluss 13 verbunden ist, wo ein erster Schlauch 14 anschliesst. Der Anschlussstutzen 12 dient zugleich als Handgriff des Handgeräts 1. Auf der Seite der Ausblasöffnung 11 weist der Deckel eine entsprechende Oeffnung auf, an welche ein kurzer zweiter Anschlussstutzen 15 anschliesst mit am Ende einem Blasanschluss 16, wo ein zweiter Schlauch 17 anschliesst.

Mindestens in ihrer untersten Position steht die Abstreifvorrichtung 6, wo sie an den Rand des Mantels 3 stösst, über denselben und damit über die Ansaugöffnung 10 und die Ausblasöffnung 11 etwas vor. Durch ihre Verschiebbarkeit quer zur Ebene der Ansaugöffnung 10 wie auch der Ausblasöffnung 11 kann die Abstreifvorrichtung 6 an die Umstände wie Art des Felles (langhaarig / kurzhaarig, weich / straff) und Grad der Feuchtigkeit desselben angepasst werden. Sie kann auch so weit hochgeschoben werden, dass sie nicht über die Ansaugöffnung 10 und die Ausblasöffnung 11 übersteht.

Eine Vorrichtung zum Trocknen eines Haustieres weist (Fig. 2) neben dem Handgerät 1 eine Pumpeinrichtung 18 auf, welche für die Luftumwälzung sorgt. Der erste Schlauch 14 und der zweite Schlauch 17 verbinden den Sauganschluss 13 bzw. den Blasanschluss 16 des Handgerätes 1 mit einem mit der Pumpeinrichtung 18 verbundenen Vorsatzgerät 19, das Regler zur Einstellung der Luftströmungen durch die Schläuche 14, 17 enthält.

In einem Gehäuse der Pumpeinrichtung 18 ist ein über das Vorsatzgerät 19 mit dem ersten Schlauch 14 verbundener Filter 20 angeordnet, auf den eine Pumpe 21, z.B. ein Ventilator, folgt, welche von einem Elektromotor 22 angetrieben wird. Der Anschluss für den zweiten Schlauch 17 am Vorsatzgerät 19 ist mit dem Ausgang der Pumpe 21 verbunden, wobei im Vorsatzgerät 19 ein Dufteinsatz zur Behandlung der Luft, die dem Blasanschluss 16 des Handgeräts 1 zugeführt wird, vorgesehen sein kann. Die Verbindung führt am Elektromotor 22 vorbei, der zugleich als Heizung dient, indem die Luft von demselben Abwärme aufnimmt und aufgeheizt wird. Dazu kann ein Wärmetauscher mit an einem Gehäuse des Elektromotors 22 angeformten Kühlrippen, an denen der Luftstrom vorbeistreicht, vorgesehen sein.

Im Gebrauch wird das Handgerät 1 mit der Ansaugöffnung 10 und der Ausblasöffnung 11 leicht an das Fell des Haustieres, das getrocknet und gereinigt werden soll, angedrückt und in Pfeilrichtung über dasselbe geführt. Aus der Ausblasöffnung 11 strömt warme Luft gegen das Fell und nimmt Feuchtigkeit von demselben auf. Sie strömt weiter durch die Abstreifvorrichtung 6 oder unter derselben durch und wird in die Ansaugöffnung 10 eingesaugt. Dabei werden lose Haare und Verunreinigungen, die von der Abstreifvorrichtung 6 aus dem Fell gelöst wurden, mitgenommen.

Von der Absaugöffnung 10 des Handgeräts 1 wird dabei Luft durch den ersten Schlauch 14 und das Vorsatzgerät 19 sowie den Filter 20, wo Verunreinigungen zurückgehalten werden, von der Pumpe 21 angesaugt. Diese pumpt sie dann am Elektromotor 22 vorbei, wo sie sich durch Aufnahme von Abwärme desselben erwärmt, wiederum über das Vorsatzgerät 19 und den Schlauch 17 zur Ausblasöffnung 11 des Handgeräts 1, wo der grössere Teil durch das Fell des Haustieres und die Abstreifvorrichtung 6 hindurch wieder in die Absaugöffnung 10 gezogen wird, sodass ein weitgehend geschlossener Kreislauf entsteht. Die Pumpe 21 kann aber zusätzlich zur zurückgeführten Luft Frischluft ansaugen.

Als Pumpeinrichtung 18 kann ein handelsüblicher Staubsauger dienen, an welchen das Vorsatzgerät 19 in geeigneter Weise angeschlossen ist.

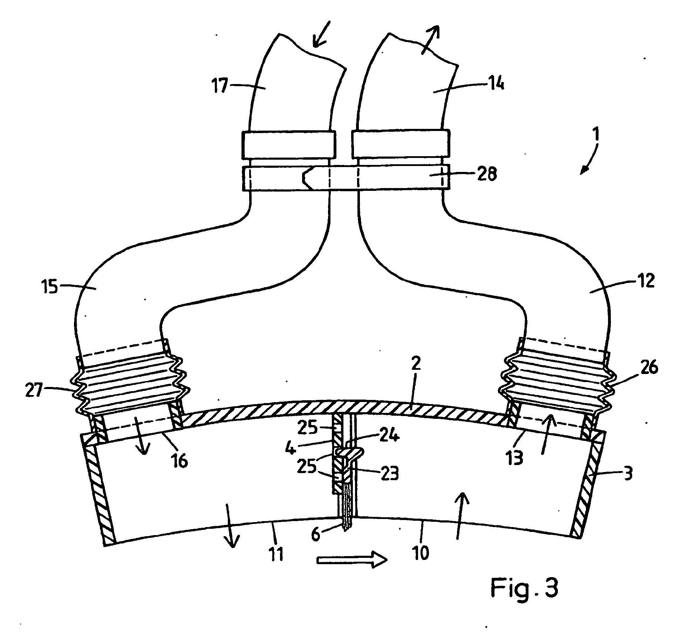

Bei einer zweiten Ausführungsform des Handgeräts 1 (Fig. 3) ist die Zwischenwand 4 fest mit dem Deckel 2 und dem Mantel 3 verbunden und die hier als Bürste ausgebildete Abstreifvorrichtung 6 an einem längs der Zwischenwand 4 verschiebbaren, wiederum in Nuten am Mantel 3 geführten Steg 23 angebracht, welcher mit einem Schnappfortsatz 24 mit einer von mehreren in regelmässigen Abständen in derselben angeordneten Oeffnungen 25 in der Zwischenwand 4 eingreifen kann, sodass die Abstreifvorrichtung 6 in einer von mehreren wählbaren Höhen festlegbar ist. Er steht in den zwei unteren Positionen über die Ansaugöffnung 10 und die Absaugöffnung 11, die er voneinander trennt, vor, während er in der obersten Position ganz in den Mantel 3 zurückgezogen ist.

Der erste Anschlussstutzen 12 ist S-förmig ausgbildet und mit der entsprechenden Oeffnung im Deckel 2 über einen ersten elastisch biegsamen Balg 26 verbunden, desgleichen der ebenfalls S-förmige zweite Anschlussstutzen 15 über einen zweiten elastisch biegsamen Balg 27. Die oberen Enden der Anschlusstutzen 12, 15 werden von einem Klettband 28 gegen eine von den Bälgen 26, 27 auf sie ausgeübte Spreizwirkung zusammengehalten, sodass ihr Abstand vom Deckel 2 mittels des Klettbandes 28 einstellbar ist. Auf diese Weise bilden die Anschlussstutzen 12, 15 eine Art von einstellbarem Bügel, unter den zwecks Handhabung des Handgeräts 1 und Bewegung desselben vorwiegend in Pfeilrichtung eine Hand eingeführt werden kann.

Im übrigen kann das Handgerät gemäss der zweiten Ausführungsform genau wie dasjenige nach der ersten Ausführungsform eingesetzt und in eine Vorrichtung wie beschrieben integriert werden.

Die Teile des Handgeräts können durchwegs oder überwiegend aus Kunststoff bestehen und im Spritzgussverfahren hergestellt werden, die Abstreifvorrichtung kann, vor allem wenn sie als flexibles Blatt ausgebildet ist, auch ganz oder teilweise aus Gummi bestehen. Die Bälge 26, 27 bestehen vorzugsweise aus Gummi.

Es sind im übrigen verschiedene Abwandlungen möglich, ohne dass der Bereich der Erfindung verlassen würde. Z.B. kann statt einer verschiebbaren Zwischenwand auch ein Satz austauschbarer Zwischenwände verschiedener Längen vorgesehen sein. Solche Zwischenwände können auch verschiedene Abstreifvorrichtungen (Kamm, Bürste usw.) tragen. Oder es können mehrere austauschbare, jeweils lediglich in einer Höhe fixierbare, aber verschieden lange Abstreifvorrichtungen zum Gebrauch mit einer festen Zwischenwand vorgesehen sein, die ebenfalls in verschiedenen Ausführungen vorliegen können. Schliesslich kann auch lediglich eine fest mit der Zwischenwand verbundene, überstehende Abstreifvorrichtung vorhanden sein.

Das Vorsatzgerät kann u.U. auch entfallen und die Schläuche direkt an die Pumpeinrichtung angeschlossen werden. Wird ein handelsüblicher Staubsauger als Pumpeinrichtung eingesetzt, so kann auch der Schlauch desselben die Pumpeinrichtung mit dem Sauganschluss des Handgeräts verbinden und das letztere, zusammen mit einem weiteren Schlauch, als Zusatzgerät des Staubsaugers ausgebildet sein. Umgekehrt ist es auch möglich, eine Pumpeinrichtung mit dem Handgerät in einem Gehäuse zu integrieren und die Vorrichtung im Ganzen als eigenständiges kompaktes Gerät auszubilden.

**Bezugezeichenliste**
- 1: Handgerät
- 2: Deckel
- 3: Mantel
- 4: Zwischenwand
- 5: Schlitz
- 6: Abstreifvorrichtung
- 7a,b: Stege
- 8: Lasche
- 9: Zähne
- 10: Absaugöffnung
- 11: Ausblasöffnung
- 12: Anschlussstutzen
- 13: Sauganschluss
- 14: Schlauch
- 15: Anschlussstutzen
- 16: Blasanschluss
- 17: Schlauch
- 18: Pumpeinrichtung
- 19: Vorsatzgerät
- 20: Filter
- 21: Pumpe
- 22: Elektromotor
- 23: Steg
- 24: Schnappfortsatz
- 25: Oeffnung
- 26, 27: Bälge
- 28: Klettband

## Patentansprüche

1. Handgerät (1) zum Trocknen eines Haustieres, mit einem Gehäuse, welches eine Absaugöffnung (10) aufweist und eine längs eines Randes derselben sich erstreckende, mindestens in einer vorgeschobenen Position über den besagten Rand vorstehende Abstreifvorrichtung (6), **dadurch gekennzeichnet, dass** es eine an der der Absaugöffnung (10) gegenüberliegenden Seite der Abstreifvorrichtung (6) anschliessende Ausblasöffnung (11) aufweist.

2. Handgerät nach Anspruch 1, **dadurch gekennzeichnet, dass** die Abstreifvorrichtung (6) als Kamm, Bürste, Blatt oder Steg ausgebildet ist.

3. Handgerät nach Anspruch 1 oder 2, **dadurch gekennzeichnet, dass** die Abstreifvorrichtung (6) quer zur Ebene der Absaugöffnung (10) verschiebbar ist.

4. Handgerät nach einem der Ansprüche 1 bis 3, **dadurch gekennzeichnet, dass** die Ausblasöffnung (11) und die Absaugöffnung (10), durch die Abstreifvorrichtung (6) getrennt, mit an den Enden der Abstreifvorrichtung (6) aneinander anschliessenden Aussenrändern nebeneinander angeordnet sind.

5. Handgerät nach Anspruch 4, **dadurch gekennzeichnet, dass** die Absaugöffnung (10) und die Ausblasöffnung (11) an der Abstreifvorrichtung (6) einen stumpfen Winkel einschliessen.

6. Handgerät nach einem der Ansprüche 1 bis 5, **dadurch gekennzeichnet, dass** der Ausblasöffnung (11) eine Heizung vorgeordnet ist.

7. Handgerät nach einem der Ansprüche 1 bis 6, **dadurch gekennzeichnet, dass** die Absaugöffnung (10) mit einem Sauganschluss (13) am Gehäuse und die Ausblasöffnung (11) mit einem Blasanschluss (16) am Gehäuse verbunden sind.

8. Vorrichtung zum Trocknen eines Haustieres mit einem Handgerät (1) nach Anspruch 7, **dadurch gekennzeichnet, dass** sie ausserdem eine zum Ansaugen und Ausblasen von Luft geeignete Pumpeinrichtung (18) aufweist mit einem Elektromotor (22) und einer von demselben angetriebenen Pumpe (21), welche mit dem Sauganschluss (13) und mit dem Blasanschluss (16) des Handgeräts (1) verbunden ist.

9. Vorrichtung nach Anspruch 8, **dadurch gekennzeichnet, dass** die Pumpeinrichtung (18) eine Heizvorrichtung zur Erwärmung der von der Pumpeinrichtung (18) ausgeblasenen Luft umfasst.

10. Vorrichtung nach Anspruch 9, **dadurch gekennzeichnet, dass** die Heizvorrichtung vom Elektromotor (22) gebildet wird, indem derselbe so in der Pumpeinrichtung (18) angeordnet ist, dass seine Abwärme zur Aufheizung der ausgeblasenen Luft genutzt wird.

11. Vorrichtung nach einem der Ansprüche 8 bis 10, **dadurch gekennzeichnet, dass** sie ein der Pumpeinrichtung (18) vorgeordnetes Vorsatzgerät (19) umfasst mit einer Saugöffnung und einer Blasöffnung, welches mindestens einen Regler zur Regelung einer Luftströmung durch die Saugöffnung oder die Blasöffnung enthält.

12. Vorrichtung nach Anspruch 11, **dadurch gekennzeichnet, dass** sie einen ersten Schlauch (14) umfasst, welcher die Saugöffnung mit dem Sauganschluss (13) des Handgeräts (1) verbindet sowie einen zweiten Schlauch (17), welcher die Blasöffnung mit dem Blasanschluss (16) des Handgeräts (1) verbindet.

## Claims

1. Handheld appliance (1) for drying a pet, with a housing having a suction opening (10) and a stripping device (6) extending along an edge of the opening and projecting above said edge at least in an advanced position, **characterised in that** it has a blowing opening (11) adjacent to the side of the stripping device (6) opposite the suction opening (10).

2. Handheld appliance according to claim 1, **characterised in that** the stripping device (6) is configured as a comb, brush, blade or bar.

3. Handheld appliance according to claim 1 or 2, **characterised in that** the stripping device (6) can be displaced transversally with regard to the plane of the suction opening (10).

4. Handheld appliance according to any one of claims 1 to 3, **characterised in that** the blowing opening (11) and the suction opening (10) are arranged adjacent to each other, separated by the stripping device (6), with their outer edges contiguous to one another at the ends of the stripping device (6).

5. Handheld appliance according to claim 4, **characterised in that** the suction opening (10) and the blowing opening (11) include an obtuse angle at the stripping device (6).

6. Handheld appliance according to any one of claims 1 to 5, **characterised in that** a heating is arranged upstream of the blowing opening (11).

7. Handheld appliance according to any one of claims 1 to 6, **characterised in that** the suction opening (10) is connected with a suction connection (13) of the housing and the blowing opening (11) is connected with a blowing connection (16) of the housing.

8. Device for drying a pet with a handheld appliance (1) according to claim 7, **characterised in that** it further has a pumping means (18) adapted for sucking in and blowing out air, the means having an electric motor (22) and a pump (12) driven by the same, the pump being connected with the suction connection (13) and the blowing connection (16) of the handheld appliance (1).

9. Device according to claim 8, **characterised in that** the pumping means (18) comprises a heating device for heating the air blown out by the pumping means (18).

10. Device according to claim 9, **characterised in that** the heating device is formed by the electric motor (22), **in that** the same is arranged in the pumping means (18) in such a way that its waste heat is used for heating the blown-out air.

11. Device according to any one of claims 8 to 10, **characterised in that** it comprises an attachment device (19) arranged upstream of the pumping means (18), the attachment device having a suction opening and a blowing opening and containing at least one control for controlling the air flow through the suction opening or the blowing opening.

12. Device according to claim 11, **characterised in that** it comprises a first hose (14) which connects the suction opening with the suction connection (13) of the handheld appliance (1), as well as a second hose (17) which connects the blowing opening with the blowing connection (16) of the handheld appliance (1).

## Revendications

1. Appareil manuel (1) pour le séchage d'un animal domestique, comportant un boîtier présentant un orifice d'aspiration (10) et un dispositif racleur (6) s'étendant le long d'un bord dudit orifice d'aspiration (10), faisant au moins saillie dudit bord dans une position avancée, **caractérisé en ce qu'**il présente un orifice de soufflage (11) contigu au côté du dispositif racleur (6) opposé à l'orifice d'aspiration (10).

2. Appareil manuel selon la revendication 1, **caractérisé en ce que** le dispositif racleur (6) est conçu sous forme de peigne, de brosse, de feuille ou de méplat.

3. Appareil manuel selon la revendication 1 ou 2, **caractérisé en ce que** le dispositif racleur (6) est déplaçable en travers du plan de l'orifice d'aspiration (10).

4. Appareil manuel selon l'une quelconque des revendications 1 à 3, **caractérisé en ce que** l'orifice de soufflage (11) et l'orifice d'aspiration (10) sont disposés l'un à côté de l'autre, séparés par le dispositif racleur (6), les bords extérieurs étant contigus l'un à l'autre au niveau des extrémités du dispositif racleur (6).

5. Appareil manuel selon la revendication 4, **caractérisé en ce que** l'orifice d'aspiration (10) et l'orifice de soufflage (11) forment un angle obtus au niveau du dispositif racleur (6).

6. Appareil manuel selon l'une quelconque des revendications 1 à 5, **caractérisé en ce qu'**un chauffage est disposé en amont de l'orifice de soufflage (11).

7. Appareil manuel selon l'une quelconque des revendications 1 à 6, **caractérisé en ce que** l'orifice d'aspiration (10) est relié à un raccord d'aspiration (13) au niveau du boîtier et l'orifice de soufflage (11) à un raccord de soufflage (16) au niveau du boîtier.

8. Dispositif pour le séchage d'un animal domestique comportant un appareil manuel (1) selon la revendication 7, **caractérisé en ce qu'**il présente en outre un dispositif de pompage (18), approprié à l'aspiration et au soufflage d'air, avec un moteur électrique (22) et une pompe (21) commandée par ce dernier qui est reliée au raccord d'aspiration (13) et au raccord de soufflage (16) de l'appareil manuel (1).

9. Dispositif selon la revendication 8, **caractérisé en ce que** le dispositif de pompage (18) comprend un dispositif de chauffage destiné à échauffer l'air soufflé par le dispositif de pompage (18).

10. Dispositif selon la revendication 9, **caractérisé en ce que** le dispositif de chauffage est formé par le moteur électrique (22), sachant que ce dernier est disposé de telle manière dans le dispositif de pompage (18) que sa chaleur d'échappement est utilisée en vue de l'échauffement de l'air soufflé.

11. Dispositif selon l'une quelconque des revendications 8 à 10, **caractérisé en ce qu'**il comprend un dispositif adaptateur (19) placé en amont du dispositif de pompage (18), le dispositif adaptateur comportant un orifice d'aspiration et un orifice de soufflage et contenant au moins un régulateur destiné à la régulation d'un écoulement d'air à travers l'orifice d'aspiration ou l'orifice de soufflage.

12. Dispositif selon la revendication 11, **caractérisé en ce qu'**il comprend un premier flexible (14) qui relie l'orifice d'aspiration au raccord d'aspiration (13) de l'appareil manuel (1), ainsi qu'un second flexible (17) qui relie l'orifice de soufflage au raccord de soufflage (16) de l'appareil manuel (1).
